# EUROPEAN PATENT SPECIFICATION

(11) **EP 4 223 482 B1**
(45) Date of publication and mention of the grant of the patent: **17.04.2024**
(21) Application number: 23154019.6
(22) Date of filing: 30.01.2023
(51) Int. Cl.: B29C 45/78, B29C 45/42

(54) **MOLDED PRODUCT MANUFACTURING SYSTEM**
FERTIGUNGSSYSTEM FÜR GEFORMTE PRODUKTE
SYSTÈME DE FABRICATION DE PRODUITS MOULÉS

(30) Priority: 07.02.2022 JP 2022016985
(43) Date of publication of application: 09.08.2023
(73) Proprietor: Yushin Precision Equipment Co. , Ltd., Kyoto (JP)
(72) Inventor: WATANABE, Fumitake, Minami-ku Kyoto (JP); KUBO, Sanai, Minami-ku Kyoto (JP)
(74) Representative: Wilson Gunn

(56) References cited:
- EP-A1- 3 623 134
- KR-B1- 101 932 606

## Description

### TECHNICAL FIELD

The present invention relates to a molded product manufacturing system, in which an apparatus for taking out a molded product includes a control device and a communication device operable to transmit internal data to an external server via a communication network.

### BACKGROUND ART

Document EP 3 623 134 A1 discloses a molded product manufacturing system according to the related art, including an injection molding machine, an apparatus for taking out a molded product, the apparatus for taking out a molded product including a communication unit operable to transmit internal data to an external server via a communication network, and one or more peripheral devices arranged around the apparatus to operate together during operation of the apparatus . In the molded product manufacturing system, the communication device mounted on the apparatus transmits external data output from the one or more peripheral devices to an external server together with information on a die.

Some of the existing apparatuses for taking out a molded product include a control device and a communication device operable to transmit internal data to an external server via the control device and a communication network, the control device having a function of receiving molding machine temperature information transmitted from a molding machine.

### SUMMARY OF INVENTION

### TECHNICAL PROBLEM

With the molded product manufacturing system according to the related art, a person responsible for work at a site at which the molding machine is installed checks whether or not various portions (including the die) of the molding machine have been heated to a desired temperature to become operable, that is, whether or not the molding machine has become ready, after the molding machine, the apparatus, and the peripheral devices are turned on before starting operation of the molded product manufacturing system or when the die is changed. Therefore, the person responsible for work needs to be at the site, or wait for the lapse of a certain time before going to the site, in order to check that the molding machine has become ready or that the molding work can be resumed with a die which has been changed. When the person responsible for work is at the site, it is desirable that operation of the system can be smoothly started based on the judgement of the person responsible for work who is watching the actual situation as in the related art.

It is an object of the present invention to provide a molded product manufacturing system that allows a person responsible for work to check the status of a molding machine when the person responsible for work is not at the site, and that gives priority to the judgement of the person responsible for work when the person responsible for work is at the site, by transmitting molding machine temperature information from the molding machine to an external server using a communication network for an apparatus for taking out a molded product.

### SOLUTION TO PROBLEM

The present invention provides a molded product manufacturing system including a molding machine, an apparatus for taking out a molded product, and one or more peripheral devices arranged around the apparatus for taking out a molded product to operate together during operation of the apparatus, whereby the apparatus includes a control device and a communication device operable to transmit internal data to an external server via a communication network, and the control device has a function of receiving molding machine temperature information transmitted from the molding machine. In the molded product manufacturing system according to the present invention, the communication device of the apparatus has a function of transmitting the molding machine temperature information to the external server before control operation of the apparatus is started, when the control device of the apparatus receives the molding machine temperature information from the molding machine before starting the control operation. Therefore, with the present invention, a person responsible for work, who is not at the site, is allowed to check temperature information to check that preparation of the molding machine has been completed. In the present invention, in particular, the communication device transmits the molding machine temperature information to the external server in a first condition that the control device of the apparatus receives the molding machine temperature information from the molding machine before starting the control operation and in a second condition that the control device of the apparatus has not started the control operation. Therefore, the person responsible for work who has the authority to determine to start operation of the molded product manufacturing system can confirm that preparation for starting operation or preparation for resuming operation after the die is changed has been completed or has almost been completed not only when the person responsible for work is at the site, as a matter of course, but also when the person responsible for work is not at the site, using information from the external server. In the present invention, when the person responsible for work is at the site and control operation for the apparatus has been started based on the judgement of the person responsible for work (when the second condition is not met), molding machine temperature information is not transmitted from the apparatus to the external server, by respecting the judgement of the person responsible for work who is watching the situation at the site. As a result, the work of starting operation of the system can be smoothly performed according to the present invention, by giving priority to the judgement of the person responsible for work when the person responsible for work is at the site, and by allowing the person responsible for work to confirm that preparation of the molding machine has been completed when the person responsible for work is not at the site.

When the molding machine does not have a function of externally transmitting the molding machine temperature information, the molding machine may be modified by mounting a temperature sensor unit, which acquires temperature information on the molding machine, to the molding machine to allow use of the temperature information from the temperature sensor unit as a matter of course.

The communication device may transmit molding machine temperature information to the external server, before control operation is started, when a transmission execution condition for transmitting the molding machine temperature information to the external server is set for the communication device (third condition). This makes it possible to reliably give priority to the judgement of the person responsible for work when the person responsible for work can check the status of preparation of the molding machine at the site. As a result, the present invention allows performing the same checking work as in the related art according to whether or not a transmission execution condition is set for the communication device, which enables respecting the judgement skills of the person responsible for work.

If a communication terminal configured to receive information transmitted from the external server and display the information on a display means is able to set the transmission execution condition, the person responsible for work is allowed to select to perform the work of checking the completion of preparation of the molding machine, and thus priority can be given to the intention of the person responsible for work.

When a communication terminal configured to receive the molding machine temperature information transmitted from the external server and display the molding machine temperature information on a display means is further provided, preferably the communication terminal can be set to refuse reception from the external server. Also in this manner, priority can be given to the intention of the person responsible for work according to the setting to refuse reception.

The molding machine temperature information is information indicating that a rise in temperature of the molding machine has been completed or information indicating that a fall in temperature of the molding machine has been completed. The information indicating that a rise in temperature has been completed can be used to determine to start molding work in the preparation stage. The information indicating that a fall in temperature has been completed can be used to determine the timing to start a change of the die in the preparation stage when the die is to be changed.

The communication device may further have a function of transmitting peripheral device temperature information output from the one or more peripheral devices to the external server together with the molding machine temperature information. When the peripheral devices include a temperature adjustment device, the peripheral device temperature information includes information on a temperature of the temperature adjustment device.

This allows the person responsible for work who is not at the site to also recognize the status of the completion of preparation of the peripheral devices.

### BRIEF DESCRIPTION OF DRAWINGS

Fig. 1 is a block diagram illustrating main components of a molded product manufacturing system according to an embodiment of the present invention.
Fig. 2 is a flowchart illustrating the flow of a process performed by the molded product manufacturing system in Fig. 1.
Fig. 3 illustrates an example of information that indicates completion of a rise in temperature of a molding machine as displayed on a screen of a communication terminal in the molded product manufacturing system in Fig. 1.

### DESCRIPTION OF EMBODIMENTS

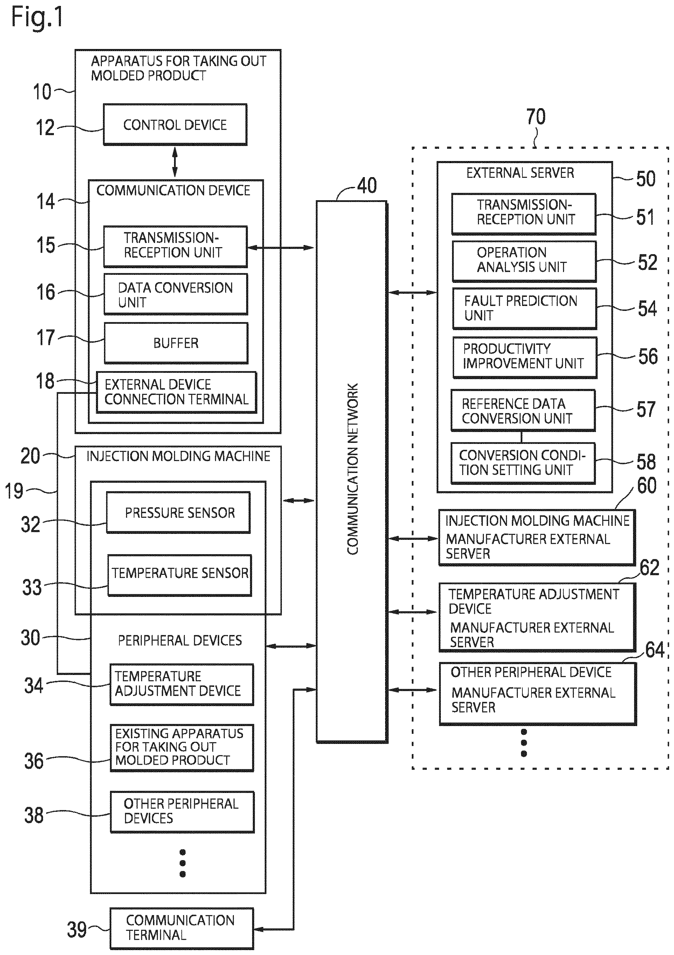

A molded product manufacturing system according to an embodiment of the present invention will be described below with reference to the drawings. Fig. 1 is a block diagram illustrating main components of a molded product manufacturing system according to an embodiment of the present invention.

In Fig. 1, a molded product manufacturing system according to the present embodiment includes an apparatus 10 for taking out a molded product, an injection molding machine 20, and peripheral devices 30. The injection molding machine 20 constitutes the core of the molded product manufacturing system. The other devices assist operation of the injection molding machine 20.

The apparatus 10 for taking out a molded product is provided on top of or adjacent to the injection molding machine 20 to take out a molded product from a die of the injection molding machine 20, cut a gate, and place the molded product at a predetermined location. Operation of the apparatus 10 is controlled by a control device 12.

In the present embodiment, the apparatus 10 includes a an IoT-compatible communication device 14 operable to transmit internal data to an external server 50 via a communication network 40. In the present embodiment, the communication device 14 is turned on at all times. The communication unit 14 includes a transmission-reception unit 15 operable to transmit and receive internal data via the communication network 40, a data conversion unit 16 operable to convert the internal data into a form suitable for transmission, and a buffer 17 operable to temporarily store the internal data which has been converted and not transmitted yet. The buffer 17 stores, as the internal data, the operation status (including a take-out sequence) of the apparatus 10, the operation status (including a molding sequence) provided from the injection molding machine 20, various types of data such as information on the die mounted to the injection molding machine 20, output data from various types of sensors mounted to the apparatus 10, etc. Such data is output to the transmission-reception unit 15 according to a control program installed in a computer or a processor of the control device 12. As a matter of course, the computer or the processor that executes the control program may be provided in the communication device 14.

The peripheral devices 30 mean devices arranged around the apparatus 10 to operate together during operation of the apparatus 10. Herein, the peripheral devices 30 include devices that constitute the injection molding machine 20, in particular. For example, a pressure sensor 32 measures the pneumatic pressure of an air cylinder operable to open and close the die of the injection molding machine 20, and a temperature sensor 33 detects the temperature of the die and the cylinder. As a matter of course, a temperature sensor unit that has a communication function may be retrofitted at a predetermined position of the molding machine when the injection molding machine 20 does not include the temperature sensor 33 unlike the present embodiment.

The peripheral devices that are independent of the apparatus 10 and the injection molding machine 20 include a temperature adjustment device 34. The temperature adjustment device 34 supplies a heat medium to the injection molding machine 20 to adjust the temperature of the die of the injection molding machine 20. Examples of the other peripheral devices 38 ... include various types of actuators, an image processing device including an imaging device, a weighing scale, a component analysis device, a cutter, a laser marker, an ultrasonic welder, a PLC, an FA personal computer, a six-axis robot, a cylinder, and a paint (label) printer.

The communication device 14 of the apparatus 10 communicates with the injection molding machine 20, the peripheral devices 30, and the external server 50 via the communication network 40, and includes a plurality of external device connection terminals 18 for communication with the plurality of peripheral devices 30. The communication device 14 that is used in the present embodiment transmits molding machine temperature information to the external server 50, before control operation of the apparatus 10 is started, when a transmission execution condition for transmitting the molding machine temperature information to the external server 50 is set for the communication device 14 (third condition). This makes it possible to reliably give priority to the judgement of the person responsible for work when the person responsible for work can check the status of preparation of the molding machine at the site . As a result, the present invention allows performing the same checking work as in the related art according to whether or not a transmission execution condition is set for the communication device 14, which enables respecting the judgement skills of the person responsible for work. In the present embodiment, the transmission execution condition can be set not only using a setting unit provided in the communication device 14, but also through a setting manipulation performed from a communication terminal 39 as discussed later.

The plurality of peripheral devices 30 are connected to the plurality of external device connection terminals 18 via a plurality of communication cables 19. Consequently, the molded product manufacturing system including the peripheral devices 30 is adapted to IoT (Internet of Things) by simply connecting the communication cables 19 between the external device connection terminals 18 and the peripheral devices 30 in terms of hardware.

The external server 50 receives internal data from the apparatus 10 via a transmission-reception unit 51 that constitutes a part of the communication device to optimize operation of the apparatus 10, achieve predictive maintenance, etc. The external server 50 not only transmits internal data to the apparatus 10 and the communication terminal 39 according to a built-in program, but also transmits internal data to the apparatus 10 and the communication terminal 39 according to a request signal. In the external server 50, an operation analysis unit 52 analyzes the internal data, a fault prediction unit 54 predicts the time and the location of a fault based on the analysis results, and a productivity improvement unit 56 improves productivity by automatically updating a program and parameters for the apparatus 10. Further, the external server 50 includes a reference data conversion unit 57 and a conversion condition setting unit 58, of which detailed descriptions are omitted.

The communication terminal 39 can receive various types of information from the transmission-reception unit 51 via the communication network 40, and display such information on a screen. The communication terminal 39 that is used in the present embodiment is able to make setting to refuse reception from the external server 50. Thus, priority can be given to the intention of the person responsible for work according to setting to refuse reception. The communication terminal 39 may receive information transmitted from the external server 50 through a wire or wirelessly, and display such information on a display, and specifically may be a smartphone, a tablet terminal, a personal computer, etc. Various types of information can be specifically received by opening a manipulation screen for the apparatus 10 or through a mail addressed to the communication terminal 93 adapted to the IoT function incorporated in the communication device 14.

The apparatus 10 transfers the data to an injection molding machine manufacturer external server 60, a temperature adjustment device manufacturer external server 62, other peripheral device manufacturer external servers 64, ..., which are external servers other than the external server 50 constituted in a cloud server 70.

In the molded product manufacturing system according to the present embodiment, when the control device 12 of the apparatus 10 receives molding machine temperature information detected by the temperature sensor 33 from the molding machine 20 before the control device 12 starts control operation, the communication device 14 of the apparatus 10 transmits the molding machine temperature information to the external server 50 before control operation of the apparatus 10 is started.

With the present embodiment, a function of allowing the person responsible for work, who is not at the site, to check temperature information to check that preparation of the molding machine has been completed can be implemented using the existing function of the apparatus for taking out a molded product or using a temperature sensor unit. The molding machine temperature information is information indicating that a rise in temperature of the molding machine 20 has been completed or information indicating that a fall in temperature of the molding machine 20 has been completed. The information indicating that a rise in temperature has been completed can be used to determine to start molding work in the preparation stage. The information indicating that a fall in temperature has been completed can be used to determine the timing to start a change of the die in the preparation stage when the die is to be changed.

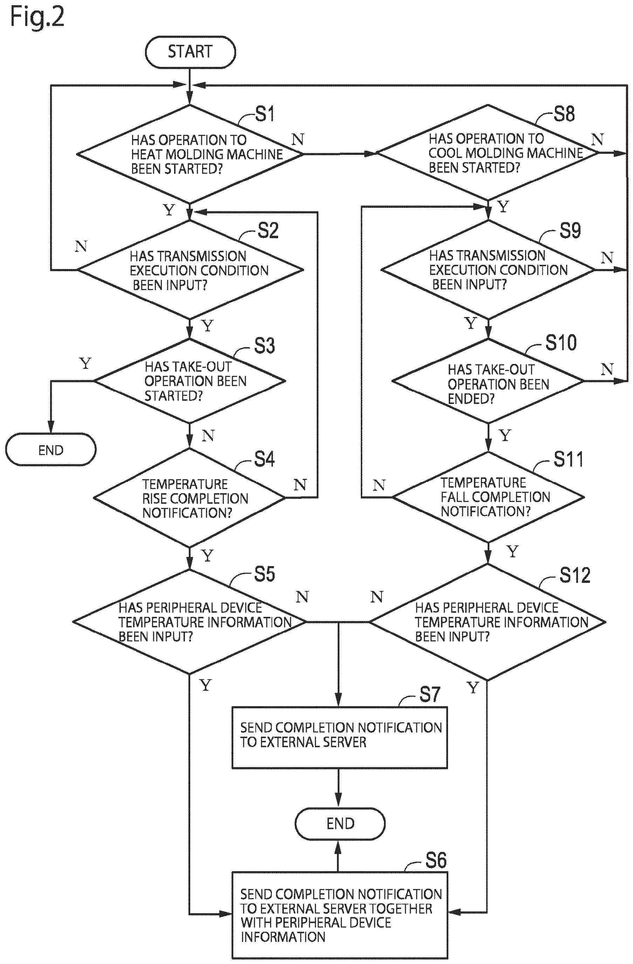

In the present embodiment, a program that implements an algorithm in the flowchart illustrated in Fig. 2 is installed in a data processing processor, such as a microcomputer, mounted in the communication device 14. As discussed earlier, the program may be installed in the control device 12.

How the operation of the molded product manufacturing system is started or ended according to the present embodiment will be described below, either based on or not based on the judgement of the person responsible for work, with reference to the flowchart in Fig. 2. First, when the molded product manufacturing system starts operation, it is determined based on information input from the injection molding machine 20 whether operation to heat the molding machine has been started (step S1) . When operation to heat the molding machine has been started, it is determined whether a transmission execution condition for transmitting molding machine temperature information to an external server has been input (step S2) . When a transmission execution condition has been input, it is determined based on information from the control device 12 whether take-out operation has been started (step S3).

The determination in step S1 as to whether operation to heat the molding machine has been started is made based on whether the communication device 14 has received molding machine temperature information from the temperature sensor 33 of the injection molding machine 20 (first condition) . In the present embodiment, when operation to heat the molding machine has been started in step S1, it is determined in step S2 whether to use a sequence to start and end operation of the molded product manufacturing system according to the present embodiment according to whether or not a third condition is met. That is, it is determined in step S2 whether a transmission execution condition for transmitting the molding machine temperature information to the external server 50 has been input, and the communication device 14 transmits the molding machine temperature information to the external server 50, before control operation is started, only when a transmission execution condition for transmitting the molding machine temperature information to the external server 50 has been set (third condition).

It is determined in step S2 whether a transmission execution condition for transmitting the molding machine temperature information to the external server 50 has been input. That is, the communication device 14 transmits the molding machine temperature information to the external server 50, before control operation is started, only when a transmission execution condition for transmitting the molding machine temperature information to the external server 50 has been set (third condition). This makes it possible to reliably give priority to the judgement of the person responsible for work when the person responsible for work can check the status of preparation of the molding machine at the site. As a result, the present embodiment allows performing the same checking work as in the related art according to whether or not a transmission execution condition is set, which enables respecting the judgement skills of the person responsible for work. The transmission execution condition can be set through the communication terminal 39 manipulated by the person responsible for work, for example. This allows the person responsible for work to select to perform the work of checking the completion of preparation of the molding machine, which gives priority to the intention of the person responsible for work.

Even if setting is made to execute transmission in step S2, the person responsible for work who is at the site determines that operation of the injection molding machine 20 can be started, and performs a manipulation. When take-out operation by the apparatus 10 is started (step S3), the operation starting sequence in Fig. 2 is ended. In step S3, when the person responsible for work is at the site and control operation for the apparatus 10 has been started based on the judgement of the person responsible for work (i.e. a second condition that the control device 12 of the apparatus 10 has not started control operation yet is not met), molding machine temperature information is not transmitted from the apparatus 10 to the external server 50, by respecting the judgement of the person responsible for work who is watching the situation at the site. As a result, the work of starting operation of the system can be smoothly performed according to the present embodiment, by giving priority to the judgement of the person responsible for work when the person responsible for work is at the site, and by allowing the person responsible for work to confirm that preparation of the injection molding machine 10 has been completed from a remote location, by switching setting so as to meet the third condition only when the person responsible for work is not at the site.

When the first, second, and third conditions are met, the communication device 14 transmits molding machine temperature information detected by the temperature sensor 33 to the external server 50. As a result, the person responsible for work who has the authority to determine to start operation of the molded product manufacturing system can confirm that preparation has been completed not only when the person responsible for work is at the site, but also when the person responsible for work is not at the site, using information from the external server 50.

Before take-out operation is started based on the judgement of the person responsible for work, it is determined in step S4 whether or not heating of the die and the cylinder of the injection molding machine 20 to a temperature at which operation can be started has been completed. When heating has not been completed, steps S2 to S4 are repeatedly performed. When heating has been completed, a notification of the completion of preparation of the injection molding machine 20 is sent to the communication terminal 39 of the person responsible for work who is assumed not to be present at the site.

In the present embodiment, it is determined before the notification whether peripheral device temperature information has been input (step S5). Examples of the peripheral devices include the temperature adjustment device 34, and the peripheral device temperature information includes information on the temperature of the temperature adjustment device 34. It is optional whether peripheral device temperature information is input. If peripheral device temperature information is input and transmitted to the external server 50, the person responsible for work who is not at the site is allowed to also recognize the status of the completion of preparation of the peripheral devices.

When peripheral device temperature information has been input, a temperature rise completion notification is sent to the external server 50 together with peripheral device information (step S6). When peripheral device temperature information has not been input, a temperature rise completion notification is sent, as it is, to the external server 50 (step S7).

When the temperature rise completion notification is received by the communication terminal 39 of the person responsible for work, who is not at the site, through a mail, a manipulation screen, etc., the person responsible for work manipulates the communication terminal 39 to instruct a worker at the site to perform a manipulation to start operation of the apparatus 10, or goes to the site to perform a manipulation to start operation of the apparatus 10 himself/herself.

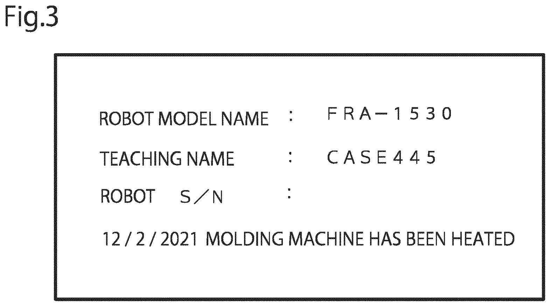

Fig. 3 illustrates a screen of a display that displays an example of a mail transmitted to the communication terminal 39 of the person responsible for work. In Fig. 3, the apparatus 10 is specified by a "robot model name: FRA-1530" which indicates the name of the model of the apparatus 10, a "teaching name: CASE 445" which indicates the program that is operating, and a "robot S/N" that indicates the serial number, below which a message "12/2/2021 Molded product has been heated" is displayed.

Steps S8 to S12 in Fig. 2 are the operation process for changing the die in the molded product manufacturing system, and correspond to the operation start process in steps S1 to S5. In the present embodiment, as discussed earlier, the communication device 14 is turned on at all times, and thus the communication device 14 can perform communication operation also after operation of the control device 12 has been stopped to change the die.

The communication device 14 determines based on information from the injection molding machine 20 whether operation to cool the molding machine has been started (step S8) . When operation to cool the molding machine has been started, it is determined whether a transmission execution condition has been input (step S9) . When a transmission execution condition has been input, it is determined whether or not the apparatus has been instructed to end take-out operation (step S10) . When an instruction to end take-out operation has not been provided before the completion of a temperature fall, it is assumed that the molding work is to be continued, and the process returns to step S1. When an instruction to end take-out operation has been provided before the completion of a temperature fall, it is assumed that the molding work is to be ended, and the process proceeds to step S11. When a temperature fall completion notification has come from the molding machine side, the process proceeds to step S12. When a temperature fall completion notification has not come, the process returns to step S9. In step S12, it is determined whether or not peripheral device temperature information has been input. The process proceeds to step S6 or S7, where a temperature fall completion notification including or not including peripheral device temperature information is sent to the external server 50 (steps S11, S12, S6, and S7), in order to notify the communication terminal 39 of the person responsible for work that cooling operation has been completed (the temperature of the die has been lowered to a temperature at which change work can be performed) .

Through such an operation process for changing the die, it can be determined based on temperature fall information that molding work has been ended and whether or not the temperature of the die has been lowered to a temperature at which change work can be performed. When the die is changed, the person responsible for work often leaves the site until the temperature of the die is lowered. Therefore, the person responsible for work can smoothly return to the site without a significant time delay if the person responsible for work away from the site can be informed of temperature fall information. The person responsible for work can determine that a certain trouble has been caused in the molding machine when a temperature fall completion notification is not received even when a considerable time elapses since the person responsible for work left the site. Conversely, when a temperature fall completion notification is received even if the process of temperature fall work has not been started, the person responsible for work can be informed that operation of the molded product manufacturing system has been stopped against the intention of the person responsible for work, such as a person other than the person responsible for work performing a manipulation to stop operation by mistake, for example. As a result, it is possible to take urgent measures against the unintended stop of operation.

### INDUSTRIAL APPLICABILITY

With the present invention, it is possible to achieve a molded product manufacturing system that allows a person responsible for work to check that preparation of a molding machine has been completed when the person responsible for work is not at the site, and that gives priority to the judgement of the person responsible for work when the person responsible for work is at the site, by transmitting molding machine temperature information to an external server using a communication network for an apparatus for taking out a molded product.

## Claims

1. A molded product manufacturing system comprising:
a molding machine (20), an apparatus (10) for taking out a molded product, and one or more peripheral devices (30) arranged around the apparatus (10) for taking out a molded product to operate together during operation of the apparatus (10),
the apparatus (10) including a control device (12) and a communication device (14) operable to transmit internal data to an external server (50) via the control device (12) and a communication network (40), and the control device (12) having a function of receiving molding machine temperature information transmitted from the molding machine (20), **characterized in that**:
the communication device (14) has a function of transmitting the molding machine temperature information to the external server (50) before control operation is started, when the control device (12) receives the molding machine temperature information from the molding machine (20) before starting the control operation.

2. The molded product manufacturing system according to claim 1, wherein
the communication device (14) transmits the molding machine temperature information to the external server (50) when a transmission execution condition for transmitting the molding machine temperature information to the external server (50) is set for the communication device (14).

3. The molded product manufacturing system according to claim 2, further comprising
a communication terminal (39) configured to receive information transmitted from the external server (50) and display the information on a display means, wherein
the communication terminal (39) is able to set the transmission execution condition for the communication device (14) .

4. The molded product manufacturing system according to claim 1, further comprising
a communication terminal (39) configured to receive the molding machine temperature information transmitted from the external server (50) and display the molding machine temperature information on a display means, wherein
the communication terminal is able to make setting to refuse reception from the external server (50).

5. The molded product manufacturing system according to any one of claims 1 to 4, wherein
the molding machine temperature information is information indicating that a rise in temperature of the molding machine (20) has been completed or information indicating that a fall in temperature of the molding machine (20) has been completed.

6. The molded product manufacturing system according to claim 1, wherein
the communication device (14) further has a function of transmitting peripheral device temperature information output from the one or more peripheral devices (30) to the external server together with the molding machine temperature information (50).

7. The molded product manufacturing system according to claim 6, wherein:
the peripheral devices (30) include a temperature adjustment device (34); and
the peripheral device temperature information includes information on a temperature of the temperature adjustment device (34) .

## Patentansprüche

1. System zur Herstellung eines Formprodukts, umfassend:
eine Formungsmaschine (20), eine Vorrichtung (10) zum Herausnehmen eines Formprodukts, und ein oder mehrere Peripheriegeräte (30), die um die Vorrichtung (10) zum Herausnehmen eines Formprodukts angeordnet sind, um während des Betriebs der Vorrichtung (10) zusammenzuarbeiten,
wobei die Vorrichtung (10) ein Steuergerät (12) und ein Kommunikationsgerät (14) umfasst, das dazu betreibbar ist, interne Daten an einen externen Server (50) über das Steuergerät (12) und ein Kommunikationsnetzwerk (40) zu übertragen, und wobei das Steuergerät (12) eine Funktion des Empfangens von Temperaturinformationen der Formungsmaschine, die von der Formungsmaschine (20) übertragen werden, aufweist, **dadurch gekennzeichnet, dass**:
das Kommunikationsgerät (14) eine Funktion des Übertragens der Temperaturinformationen der Formungsmaschine an den externen Server (50) vor dem Starten des Steuerbetriebs aufweist, wenn das Steuergerät (12) die Temperaturinformationen der Formungsmaschine von der Formungsmaschine (20) vor dem Starten des Steuerbetriebs empfängt.

2. System zur Herstellung eines Formprodukts gemäß Anspruch 1, wobei
das Kommunikationsgerät (14) die Temperaturinformationen der Formungsmaschine an den externen Server (50) überträgt, wenn eine Übertragungs-Ausführungsbedingung zum Übertragen der Temperaturinformationen der Formungsmaschine an den externen Server (50) für das Kommunikationsgerät (14) eingestellt ist.

3. System zur Herstellung eines Formprodukts gemäß Anspruch 2, ferner umfassend
einen Kommunikationsanschluss (39), der dazu konfiguriert ist, Informationen zu empfangen, die von dem externen Server (50) übertragen werden, und die Informationen auf einem Anzeigemittel anzuzeigen, wobei
der Kommunikationsanschluss (39) dazu in der Lage ist, die Übertragungs-Ausführungsbedingung für das Kommunikationsgerät (14) einzustellen.

4. System zur Herstellung eines Formprodukts gemäß Anspruch 1, ferner umfassend
einen Kommunikationsanschluss (39), der dazu konfiguriert ist, die Temperaturinformationen der Formungsmaschine zu empfangen, die von dem externen Server (50) übertragen werden, und die Temperaturinformationen der Formungsmaschine auf einem Anzeigemittel anzuzeigen, wobei
der Kommunikationsanschluss dazu in der Lage ist, eine Einstellung vorzunehmen, um den Empfang von dem externen Server (50) zu verweigern.

5. System zur Herstellung eines Formprodukts gemäß einem der Ansprüche 1 bis 4, wobei
die Temperaturinformationen der Formungsmaschine Informationen sind, die angeben, dass ein Anstieg der Temperatur der Formungsmaschine (20) abgeschlossen ist, oder Informationen, die angeben, dass ein Abfall der Temperatur der Formungsmaschine (20) abgeschlossen ist.

6. System zur Herstellung eines Formprodukts gemäß Anspruch 1, wobei
das Kommunikationsgerät (14) ferner die Funktion des Übertragens von Temperaturinformationen der Peripheriegeräte, die von dem einen oder den mehreren Peripheriegeräten (30) ausgegeben werden, zusammen mit den Temperaturinformationen der Formungsmaschine (50) an den externen Server aufweist.

7. System zur Herstellung eines Formprodukts gemäß Anspruch 6, wobei:
die Peripheriegeräte (30) ein Temperaturanpassungsgerät (34) beinhalten; und
die Temperaturinformationen der Peripheriegeräte Informationen über eine Temperatur des Temperaturanpassungsgeräts (34) beinhalten.

## Revendications

1. Système de fabrication de produits moulés comprenant :
une machine (20) de moulage, une installation (10) de démoulage d'un produit moulé, et un ou plusieurs dispositifs (30) périphériques disposés autour de l'installation (10) de démoulage d'un produit moulé pour fonctionner ensemble pendant un fonctionnement de l'installation (10),
l'installation (10) comprenant un dispositif (12) de commande et un dispositif (14) de communication pouvant fonctionner pour transmettre des données internes à un serveur (50) extérieur par l'intermédiaire du dispositif (12) de commande et d'un réseau (40) de communication, et le dispositif (12) de commande ayant la fonction de recevoir de l'information sur la température de la machine de moulage transmise à partir de la machine (20) de moulage, **caractérisé en ce que** :
le dispositif (14) de communication a la fonction de transmettre l'information sur la température de la machine de moulage au serveur (50) extérieur avant de commencer l'opération de commande, lorsque le dispositif (12) de commande reçoit l'information sur la température de la machine de moulage de la machine (20) de moulage avant de commencer l'opération de commande.

2. Système de fabrication de produits moulés suivant la revendication 1,
dans lequel
le dispositif (14) de communication transmet l'information sur la température de la machine de moulage au serveur (50) extérieur, lorsqu'une condition d'exécution de la transmission pour transmettre l'information sur la température de la machine de moulage au serveur (50) extérieur est fixée pour le dispositif (14) de communication.

3. Système de fabrication de produits moulés suivant la revendication 2, comprenant en outre
un terminal (39) de communication configuré pour recevoir de l'information transmise depuis le serveur (50) extérieur et afficher l'information sur un moyen d'affichage, dans lequel
le terminal (39) de communication est apte à fixer la condition d'exécution d'une transmission pour le dispositif (14) de communication.

4. Système de fabrication de produits moulés suivant la revendication 1, comprenant en outre
une borne (39) de communication configurée pour recevoir l'information sur la température de la machine de moulage transmise depuis le serveur (50) extérieur et afficher l'information sur la température de la machine de moulage sur un moyen d'affichage, dans lequel
le terminal de communication est apte à faire un réglage pour refuser une réception depuis le serveur (50) extérieur.

5. Système de fabrication de produits moulés suivant l'une quelconque des revendications 1 à 4, dans lequel
l'information sur la température de la machine de moulage est une information indiquant qu'une élévation de la température de la machine (20) de moulage a eu lieu ou une information indiquant qu'un abaissement de la température de la machine (20) de moulage a eu lieu.

6. Système de fabrication de produits moulés suivant la revendication 1, dans lequel
le dispositif (14) de communication a, en outre, la fonction de transmettre une information sur la température de dispositif périphérique sortie depuis le un ou les plusieurs dispositifs (30) périphériques au serveur extérieur ensemble avec l'information (50) sur la température de la machine de moulage.

7. Système de fabrication de produits moulés suivant la revendication 6, dans lequel :
les dispositifs (30) périphériques comprennent un dispositif (34) de réglage de la température ; et
l'information sur la température des dispositifs périphériques comprend de l'information sur une température du dispositif (34) de réglage de la température.
